# EUROPÄISCHE PATENTSCHRIFT

(11) **EP 1 677 938 B1**
(45) Veröffentlichungstag und Bekanntmachung des Hinweises auf die Patenterteilung: **23.01.2008**
(21) Anmeldenummer: 04765346.4
(22) Anmeldetag: 17.09.2004
(51) Int. Cl.: B23K 1/00, B23K 1/005

(54) **VERFAHREN ZUR HERSTELLUNG VON ALUMINIUMHALTIGEN WABENKÖRPERN MIT STRAHLUNGSHEIZERN**
METHOD FOR THE PRODUCTION OF ALUMINUM-CONTAINING HONEYCOMB BODIES WITH THE AID OF RADIANT HEATERS
PROCEDE POUR PRODUIRE DES CORPS EN NID D'ABEILLES CONTENANT DE L'ALUMINIUM AU MOYEN DE SYSTEMES DE CHAUFFAGE PAR RAYONNEMENT

(30) Priorität: 19.09.2003 DE 10343463
(43) Veröffentlichungstag der Anmeldung: 12.07.2006
(73) Patentinhaber: Emitec Gesellschaft für Emissionstechnologie mbH, 53797 Lohmar (DE)
(72) Erfinder: SCHAPER, Simone, 53111 Bonn (DE); ROLLE, Arndt-Udo, 53721 Siegburg (DE)
(74) Vertreter: Rössler, Matthias
(86) Internationale Anmeldenummer: PCT/EP2004/010453
(87) Internationale Veröffentlichungsnummer: WO 2005/030420

(56) Entgegenhaltungen:
- WO-A-02/081137
- US-A- 3 416 218

## Beschreibung

Die vorliegende Erfindung betrifft ein Verfahren zur Herstellung von aluminiumhaltigen Wabenkörpern, wobei zumindest teilweise strukturierte Metallfolien zur Formgebung einer Wabenstruktur mit etwa parallel zu einer Achse verlaufenden Kanälen gestapelt und/oder gewickelt, zumindest teilweise in ein Mantelrohr eingefügt und zumindest in Teilbereichen fügetechnisch miteinander verbunden werden. Solche metallischen Wabenkörper werden beispielsweise als Katalysator-Trägerkörper zur Reinigung eines Abgases einer Verbrennungskraftmaschine eingesetzt.

Bekannte Wabenkörper, insbesondere metallische Katalysator-Trägerkörper, weisen eine Wabenstruktur mit beispielsweise spiralig oder s-förmig gewundenen, dünnwandigen, glatten und/oder gewellten Blechfolien auf, die in einem kreiszylindrischen oder auch ovalzylindrischen Mantelrohr fügetechnisch durch Schweißen, Löten, Sintern, Kleben oder dergleichen miteinander verbunden sind (Siehe US-A-02081137).

Zur Erhöhung der Widerstandsfähigkeit eines solchen Wabenkörpers gegen thermische Wechselbelastung ist bereits bekannt, lediglich in bestimmten Teilbereichen, beispielsweise stirnseitig, die Blechfolien der Wabenstruktur fügetechnisch miteinander und gegebenenfalls auch mit dem Mantelrohr zu verbinden, so dass bei einer auftretenden thermischer Belastung für Mantelrohr und Wabenstruktur ungehinderte Dehnungsmöglichkeiten bestehen, wodurch plastische Wechselverformungen der Wabenstruktur mit den Folgen der Zerstörung und Ablösung der Wabenstruktur vermieden werden.

Weiterhin sind Verfahren zur stirnseitigen fügetechnischen Verbindung einer in einem Mantelrohr angeordneten Wabenstruktur bekannt, bei dem die fügetechnische Verbindung in einem einige Stunden andauernden diskontinuierlichen Prozess im Hochtemperaturofen durchgeführt wird. Die einzelnen Wabenkörper werden dabei zu Chargen gesammelt in den Ofen gegeben. Zur Vermeidung von chemischen Reaktionen, wie beispielsweise unerwünschte Kristallbildung oder Oxidation insbesondere an der Oberfläche der Blechfolien, findet der fügetechnische Prozess im Ofen unter einer beispielsweise Argon und/oder Wasserstoff enthaltenden Schutzgasatmosphäre oder im Vakuum statt. Dies hat insbesondere einen relativ hohen apparativen Aufwand und entsprechend hohe Kosten zur Folge.

Weiterhin sind kontinuierliche Verfahren bekannt, die bei der Erzeugung von fügetechnischen Verbindung der Blechfolien Induktionsspulen verwenden. Die Induktionsspulen haben die Aufgabe, zumindest Teilbereiche, in denen letztendlich eine fügetechnische Verbindung der Blechfolien hergestellt werden soll, zu erwärmen, so dass beispielsweise ein in den Teilbereichen angeordnetes Lot zu fließen beginnt und nach dem Abkühlen eine derartige Verbindung generiert. In Abhängigkeit von der Art der fügetechnischen Verbindung müssen dabei die Induktionsspulen mit unterschiedlichen Wechselspannungsfrequenzen betrieben werden und relativ dicht an die entsprechenden Teilbereiche des Wabenkörpers herangeführt werden. Dies kann zu einer ungleichmäßigen Ausbildung von fügetechnischen Verbindungen in den jeweiligen Teilbereichen führen.

Hiervon ausgehend ist es Aufgabe der vorliegenden Erfindung ein Verfahren zur Herstellung von Wabenkörpern anzugeben, das eine Bearbeitung von Metallfolien enthaltend Aluminium ermöglicht, und welches insbesondere zur kontinuierlichen Herstellung geeignet ist, wobei die Qualität der herzustellenden fügetechnischen Verbindungen verbessert ist.

Diese Aufgaben werden gelöst durch ein Verfahren gemäß den Merkmalen des Anspruchs 1. Weitere vorteilhafte Ausgestaltungen des Verfahrens sind in den abhängigen Ansprüchen beschrieben.

Das erfindungsgemäße Verfahren zur Herstellung von metallischen Wabenkörpern umfasst folgende Schritte:
- Auswahl von zumindest teilweise strukturierten Metallfolien auf einer Aluminium-Basis;
- Stapeln und/oder Wickeln von zumindest teilweise strukturierten Metallfolien zur Formgebung einer Wabenstruktur mit Kanälen;
- Aufheizen der Metallfolien mit Hilfe mindestens eines Strahlungsheizers von der offenen Stirnfläche der Kanäle her, wobei die Wabenstruktur zumindest in einem Teilbereich so aufgeheizt wird, dass der mindestens eine Teilbereich nach etwa 2 Sekunden bis etwa 30 Sekunden eine Temperatur von etwa 450°C bis etwa 600°C aufweist;
   fügetechnisches Verbinden der Metallfolien miteinander in dem mindestens einen Teilbereich.

Unter einer Metallfolie auf Aluminium-Basis wird im folgenden eine Metallfolie verstanden, die zumindest 90 Gew.% (Gewichtsprozent) Aluminium aufweist. Vorteilhafter Weise beträgt der Aluminiumanteil gemittelt mindestens ca. 95 Gew.% oder sogar mindestens ca. 99 Gew.%. Unter Umständen kann es sogar erforderlich sein, Metallfolien mit einem noch höheren Aluminiumgehalt auszuwählen, beispielsweise mit mehr als 99,9 Gew.-% Aluminium. Im folgenden wird, soweit nicht anderweitig explizit darauf hingewiesen wird, mit dem Begriff "Metallfolie" stets auf eine solche aluminiumhaltige Metallfolie Bezug genommen.

Ergänzend kann die Metallfolie zumindest eine der folgenden chemische Komponenten aufweisen: Mangan (Mn), Silizium (Si), Magnesium (Mg), Kupfer (Cu), Titan (Ti), Eisen (Fe). Beispielhaft sind folgende Metallfolien einsetzbar: AA3005 (Al Mn 1 Mg 0.5); AA3003 (Al Mn 1 Cu); AA3103 (Al Mn 1); und AA 8001 (Al Fe Si).

Überraschender Weise haben Versuche gezeigt, dass bei solchen Wabenkörpern relativ hohe Aufheizgeschwindigkeiten erzielbar sind. So ist es möglich, mit geeigneten Wärmequellen, wie sie nachfolgend noch beschrieben werden, die Metallfolien bereits innerhalb von 2 Sekunden auf die gewünschte Temperatur zu erhitzen. Dadurch lassen sich extrem kurze Fertigungszyklen erzielen. Für den Fall, dass beispielsweise die Ausgestaltung der Kontaktzonen der Metallfolien miteinander oder mit einem sie umgebenden Mantelrohr nicht vollkommen gleichmäßig vorliegen, kann es jedoch auch erforderlich sein, eine etwas langsamere Erwärmung vorzunehmen, so dass der gewünschte Temperaturbereich erst nach 15 bis 30 Sekunden erreicht wird. Darüber hinaus sollte nur noch unter besonderen Umständen gegangen werden, weil dann eine verstärkte Oxidierung der Oberfläche der Metallfolien festzustellen ist, die eine weitere gleichmäßige Wärmeeinbringung deutlich erschwert.

Die Temperatur beträgt erfindungsgemäß ca. zwischen 450°C bis 600°C. Hierbei ist von entscheidenden Bedeutung, welches Lotmittel ggf. zur Ausbildung einer fügetechnischen Verbindung der Metallfolien zum Einsatz gelangt. Handelt es sich beispielsweise um ein Lotmittel auf Zink-Basis, so genügen unter Umständen bereits Temperaturen von ca. 450 °C bis etwa 530°C, wobei vorzugsweise auch kürzere Aufwärmzeiten benötigt werden. Werden die Metallfolien aber zum Beispiel mit einem Lotmittel auf Aluminium-Silizium-Basis miteinander verbunden, so sind Temperaturen von ca. 560 °C bis ca. 600°C einzustellen, wobei ggf. auf längere Erwärmungszeiträume zurückgegriffen werden sollte. Gerade bei den letztgenannten Lotmitteln muss demnach auf Temperaturen erwärmt werden, die nur knapp unterhalb der Schmelztemperatur der Metallfolie selbst liegen. Insbesondere liegen die Temperaturen in einem Bereich, der kleiner als 70°C, insbesondere kleiner 50°C oder sogar kleiner 30°C unterhalb des Schmelzpunktes der miteinander zu verbindenden Metallfolien liegt.

Aufgrund der kurzen Aufheizzeit auf diese hohen Temperaturen und eine gezielte Erwärmung vorgebbarer Teilbereiche wird eine sehr effiziente und energiesparende Methode angegeben. Dies hat auch den Vorteil, dass das vorgeschlagene Verfahren insbesondere zur Serienfertigung beziehungsweise Massenfertigung von metallischen Wabenkörpern geeignet ist.

Weiterhin wird vorgeschlagen, dass zum Aufheizen der Wabenstruktur Strahlungsheizer eingesetzt werden, die eine gerichtete Infrarot-Heizstrahlung generieren, wobei ein deutliches Temperaturgefälle nahe außerhalb des mindestens einen Teilbereichs erzeugt wird. Die räumlich sehr stark begrenzte Wärmeeinbringung aufgrund der im wesentlichen parallelen Infrarot-Heizstrahlung führt zu einer sehr gleichmäßig verteilten Wärmeenergie und somit zu einer sehr einheitlichen Ausbildung von Verbindungen innerhalb der erhitzten Teilbereiche. Folglich werden mit dem erfindungsgemäßen Verfahren metallische Wabenkörper hergestellt, die qualitativ hochwertige fügetechnische Verbindungen der Metallfolien aufweisen, wobei dieser Aufheizprozess nur von geringer zeitlicher Dauer ist.

Gemäß einer weiteren Ausgestaltung des Verfahrens weist die Wabenstruktur etwa parallel zu einer Achse verlaufende Kanäle auf, wobei die Heizstrahlung derart auf eine Stirnseite der Wabenstruktur ausgerichtet ist, dass die Wabenstruktur nur in Teilbereichen mit einer axialen Tiefe aufgeheizt wird, die geringer ist als die axiale Länge der Kanäle. Die erlaubt die Herstellung von Wabenkörpern, deren Metallfolien beispielsweise nur nahe der Stirnseite miteinander verbunden sind, wobei insbesondere eine thermisch bedingte Ausgleichsdehnung der Metallfolien zueinander gewährleistet wird. Mit Stirnseite ist in diesem Zusammenhang die Fläche gemeint, in der die Stirnflächen der Kanäle im wesentlichen angeordnet sind. bei dem die Metallfolien vor dem Aufheizen zumindest teilweises in ein Mantelohr eingefügt, miteinander fügetechnisch verbunden, anschließend vollständig in das Mantelrohr eingesetzt und einer Anzahl der Metallfolien mit diesem fügetechnisch verbunden werden. Dabei können beispielsweise unterschiedliche Strahlungsheizer eingesetzt werden, wobei zumindest bei dem Verbinden der Metallfolien miteinander eine relativ homogene Verteilung der Wärmekapazität in den Teilbereichen gewährleistet wird. Somit kann für diese Verbindung ein etwas niederenergetischerer Strahlungsheizer verwendet werden, als anschließend bei der Generierung der Verbindung von Mantelrohr und Wabenstruktur.

Gemäß einer weiteren Ausgestaltung des Verfahrens erfolgt vor dem Aufheizen ein vollständiges Einfügen der Metallfolien in das Mantelrohr, wobei das Mantelrohr vorzugsweise über die Stirnseiten der Wabenstruktur hinausragt. Dies hat den Vorteil, dass die Metallfolien nach der Ausbildung der fügetechnischen Verbindungen nicht mehr relativ zu dem Mantelrohr bewegt werden müssen.

Gemäß noch einer weiteren Ausgestaltung des Verfahrens werden die Metallfolien vor dem Aufheizen außen an einem Innenrohr so angeordnet, dass die Metallfolien im wesentlichen quer zum Innenrohr verlaufende Kanäle bilden, wobei einer Anzahl Metallfolien mit dem Innenrohr fügetechnisch verbunden werden. Somit ist beispielsweise auch ein Verfahren zur Herstellung von radial durchströmbaren Wabenkörpern angegeben, bei dem das Innenrohr insbesondere Öffnungen aufweist, durch die das zentral angeströmte Innenrohr ein Gas in die radial auswärtsgerichteten Kanäle ausströmt, oder entgegengesetzt.

Es ist besonders vorteilhaft, angrenzende Abschnitte des Mantelrohres bzw. des Innenrohres gleichzeitig und gegebenenfalls unter zu Hilfenahme einer induktiv wirkenden Heizung zu erhitzen. Auf diese Weise kann auch eine fügetechnische Verbindung zwischen einer Anzahl Metallfolien und dem Mantelrohr bzw. dem Innenrohr erzeugt werden. Dies hat zur Folge, dass die Herstellung von fügetechnischen Verbindungen der Metallfolien miteinander sowie von Metallfolien mit dem Mantelrohr bzw. Innenrohr in einem Verfahrensschritt erfolgt, wodurch insbesondere die Fertigungsdauer reduziert wird. Dabei ist jedoch zu berücksichtigen, dass gegebenenfalls die Aufheizzeiten zur Erreichung einer bestimmten Temperatur verlängert sein können, wenn das Mantelrohr bzw. das Innenrohr mit erhitzt werden soll. Dies hat insbesondere in den unterschiedlichen Wärmekapazitäten der Metallfolien und des Mantelrohres bzw. Innenrohres seinen Ursprung.

Gemäß noch einer weiteren Ausgestaltung des Verfahrens wird die mindestens eine Stirnseite der Wabenstruktur vollständig bis zu einer vorgebbaren Tiefe erhitzt. Dies führt zu einer kompletten, stirnseitigen Verbindung von Metallfolien. Somit wird verhindert, dass beispielsweise stirnseitig angeordnete Enden der Metallfolien aufgrund von in einem Abgasstrom auftretenden Druckschwankungen zum Schwingen angeregt werden, wobei aufgrund dieser Schwingung gegebenenfalls benachbarte fügetechnische Verbindungen aufgrund mechanischer Dauerbelastung gelöst werden. Demnach erhöht die Ausbildung von fügetechnischen Verbindungen der Metallfolien miteinander über die gesamte Stirnseite der Wabenstruktur beispielsweise die Lebensdauer eines Wabenkörpers, der als Katalysator-Trägerkörper in einem Abgassystem eingesetzt wird.

Weist die Wabenstruktur etwa parallel zu einer Achse verlaufende Kanäle auf, so wird gemäß einer weiteren Ausgestaltung des Verfahrens die Tiefe der erhitzten Teilbereiche variiert, wobei vorzugsweise in radial außen angeordneten Teilbereichen der Wabenstruktur bis in eine größere Tiefe erhitzt wird als in radial innen angeordneten Teilbereichen. In Hinblick auf einer Ausgestaltung eines radial durchströmbaren Wabenkörpers, ist natürlich auch einer entsprechend variierende Tiefe in axialer Richtung und/oder Umfangsrichtung des Wabenkörpers möglich. Auf diese Weise kann beispielsweise erreicht werden, dass eine stabilere ausgeführte Verbindung zwischen dem Wabenkörper und dem Mantelrohr bzw. Innenrohr hergestellt wird, als die fügetechnischen Verbindungen der Metallfolien miteinander.

Gemäß einer weiteren Ausgestaltung des Verfahrens trifft die Heizstrahlung in einem Winkel zwischen 10° und 80° auf die mindestens eine Stirnseite der Wabenstruktur. Der gewählte Winkel hat dabei Auswirkungen auf die Tiefe, bis zu der die Wabenstruktur erhitzt wird. Bei Winkeln kleiner als 10° erstreckt sich die Heizstrahlung auf einen relativ großen Teilbereich der Stirnseite. Dies hat zur Folge, dass die von dem Strahlungsheizer erzeugte Wärmeenergie auf größere Teilbereiche verteilt wird, wodurch die Energieeinbringung pro Flächeneinheit reduziert und der Aufheizprozess verlangsamt wird. Winkel größer als 80° sind ebenfalls zu vermeiden, da hierbei ein Großteil der Heizstrahlung bzw. Wärmeenergie direkt durch die Wabenstruktur hindurchtritt und nicht zur Erwärmung der Metallfolien genutzt werden kann. Bei der Wahl des Winkels ist weiterhin die äußere Form der Stirnseite zu berücksichtigen. Handelt es sich beispielsweise um eine teleskopierte Anordnung von Metallfolien, bei der benachbarte Metallfolien teilweise versetzt zueinander angeordnet sind, sollten beispielsweise je nach Art der Teleskopierung relativ große beziehungsweise relativ kleine Winkel verwendet werden, während bei einer im wesentlichen ebenen Stirnseite Winkel in einem Bereich von 30° bis 60° bevorzugt werden.

Gemäß noch einer weiteren Ausgestaltung des Verfahrens wird der Wabenkörper während des Aufheizens relativ zu dem mindestens einen Strahlungsheizer bewegt. Auf diese Weise wird erreicht, dass, mit Hilfe eines Strahlungsheizers, der eine räumlich begrenzte Heizstrahlung aussendet, gegebenenfalls auch große Teilbereiche der Wabenstruktur, insbesondere die gesamte Stirnseite der Wabenstruktur, erhitzt werden. Gemäß einer Verfahrensvariante wird vorgeschlagen, eine rotatorische Relativbewegung des mindestens einen Strahlungsheizers um die Achse des Wabenkörpers auszuführen, wobei ebenfalls eine großflächige und gleichmäßige Erwärmung der Wabenstruktur gewährleistet ist.

Vorzugsweise wird die Relativbewegung zwischen Wabenkörper und dem mindestens einen Strahlungsheizer dadurch generiert, dass der Wabenkörper um seine Achse rotiert und/oder der Winkel zwischen der Strahlungsachse des mindestens einen Strahlungsheizers und der Achse des Wabenkörpers verändert wird. Auf diese Weise wird sichergestellt, dass die Heizstrahlung bis in die gewünschte Tiefe der Wabenstruktur eindringt, unabhängig davon, ob die zu heizenden Teilbereiche nahe einem hervorstehenden Mantelrohr oder in zentral angeordneten Teilbereichen der Stirnseite liegen.

Gemäß noch einer weiteren Ausgestaltung des Verfahrens sind die fügetechnischen Verbindungen durch Löten, Sintern und/oder Diffusionsschweißen hergestellt. Dabei ist es besonders vorteilhaft, vor dem Aufheizen zum Ausbilden der fügetechnischen Verbindungen Lot, Diffusionsvermittler oder dergleichen in den Teilbereichen anzuordnen. Bevorzugt wird die Ausbildung von fügetechnischen Verbindungen durch Löten, wobei vor dem Aufheizen Lot in den Teilbereichen angeordnet wird. Dadurch werden die Temperaturen, die zur Ausbildung der fügetechnischen Verbindung notwendig sind, relativ niedrig gehalten, wobei relativ geringe Taktzeiten bis zur Ausbildung der Verbindungen eingehalten werden können.

Treten bei der Erzeugung der fügetechnischen Verbindung besonders hohe Temperaturen auf (insbesondere höher als 550° C), so ist es vorteilhaft, diese Verbindungen unter Schutzgas herzustellen. Bekannte Schutzgase, insbesondere mit einem Anteil von Argon, sind hierzu geeignet.

Nachfolgend wird das erfindungsgemäße Verfahren im Zusammenhang mit einer zur Durchführung des Verfahrend geeigneten Vorrichtung näher beschrieben.

Die Vorrichtung zur Herstellung von metallischen Wabenkörpern, insbesondere zur Durchführung des erfindungsgemäßen Verfahrens, umfasst eine Positionierfläche zur Positionierung eines Wabenkörpers während eines Aufheizvorgangs sowie mindestens einen Strahlungsheizer mit einer Strahlungsachse. Die Vorrichtung zeichnet sich dadurch aus, dass die Positionierfläche und die Strahlungsachse des Strahlungsheizers einen Winkel von 10° bis 80° einschließen. Dabei ist der Strahlungsheizer insbesondere so gestaltet, dass dieser in Hinblick auf die Stirnseite eines auf der Positionierfläche fixierten Wabenkörpers mit einem Winkel von 10° bis 80° strahlt. Der Strahlungsheizer erlaubt ein schnelles Aufheizen von Teilbereichen des Wabenkörpers zur Ausbildung von fügetechnischen Verbindungen.

Um eine möglichst gleichmäßige Erwärmung von Teilbereichen des Wabenkörpers zu gewährleisten, ist die Positionierfläche vorzugsweise schwenkbar, so dass der Winkel, insbesondere auch während des Aufheizvorgangs, einstellbar ist. Dies kann ebenfalls durch eine weitere Ausgestaltung der Vorrichtung erreicht werden, wobei der mindestens eine Infrarot-Strahlungsheizer schwenkbar ist.

Die Vorrichtung ist der Abstand zwischen der Positionierfläche und des mindestens eines Infrarot-Strahlungsheizers veränderbar. Besonders vorteilhaft ist es dabei, dass der mindestens eine Infrarot-Strahlungsheizer relativ zur Positionierfläche auf vorgebbaren Bahnen bewegbar ist. Auf diese Weise kann beispielsweise gewährleistet werden, dass die fügetechnischen Verbindungen in verschiedenen Teilbereichen der beheizten Stirnseite über eine variierende Tiefe generiert werden. In Hinblick auf eine Überlagerung mehrerer Relativbewegungen von Wabenkörper und dem mindestens einen Infrarot-Strahlungsheizer ist es besonders vorteilhaft, diese Bewegungen aufeinander abzustimmen, insbesondere indem die einzelnen Bewegungen messtechnisch erfasst und/oder mittels einer gemeinsamen, vorzugsweise computergesteuerten Steuerungseinheit koordiniert werden.

Die Positionierfläche hat beispielsweise auch Haltemittel zur Fixierung des Wabenkörpers. Dadurch wird sichergestellt, dass eine gewünschte Positionierung des Wabenkörpers gegenüber dem mindestens einen Infrarot-Strahlungsheizer eingehalten wird. Derartige Haltemittel sind insbesondere dann von Bedeutung, wenn die Positionierfläche Teil eines Fließbandes ist. Ein derartiges Fließband ermöglicht die Herstellung von metallischen Wabenkörpern im kontinuierlichen Prozess, wobei dies durch die kurzen Aufwärmzeiten des Wabenkörpers mittels der Infrarot-Strahlungsheizer besonders angebracht ist.

Außerdem können Spiegel zur Umlenkung beziehungsweise Reflexion der Heizstrahlung vorgesehen sein. Dabei sind insbesondere Teile der Heizstrahlung gemeint, welche von den Metallfolien bereits reflektiert wurden. Die Verwendung derartiger Spiegel hat demnach eine verbesserte Nutzung der von den Infrarot-Strahlungsheizern erzeugten Heizstrahlung zur Folge. Allerdings ist es auch möglich, die Spiegel direkt anzustrahlen und so auf die aufzuheizenden Teilbereiche zu lenken, wobei beispielsweise in die direkte Strahlungsachse hineinragende Vorsprünge oder Absätze nahe der Stirnseite des Wabenkörpers "umgangen" werden können.

Für den Fall, dass die fügetechnischen Verbindungen bei sehr hohen Temperaturen erzeugt werden, weist die Vorrichtung Mittel zur Generierung einer lokalen Schutzgasatmosphäre auf, insbesondere ein Gehäuse. Dabei umschließt das Gehäuse zumindest Abschnitte nahe des Teilbereiches des Wabenkörpers, der mit Hilfe der Infrarot-Strahlungsheizer erwärmt wird, wobei eine Behinderung der direkten Heizstrahlung zu vermeiden ist.

Das Verfahren wird nun anhand der folgenden Zeichnungen näher erläutert. Die in diesem Zusammenhang vorgetragenen Erläuterungen stellen jedoch insoweit keine Einschränkung der Erfindung dar.

Es zeigen:
- Fig. 1: eine Ausführungsform eines hergestellten Wabenkörpers,
- Fig. 2: eine Ausführungsform einer Herstellungs-Vorrichtung und
- Fig. 3: eine zweite Ausführungsform einer Herstellungs-Vorrichtung.

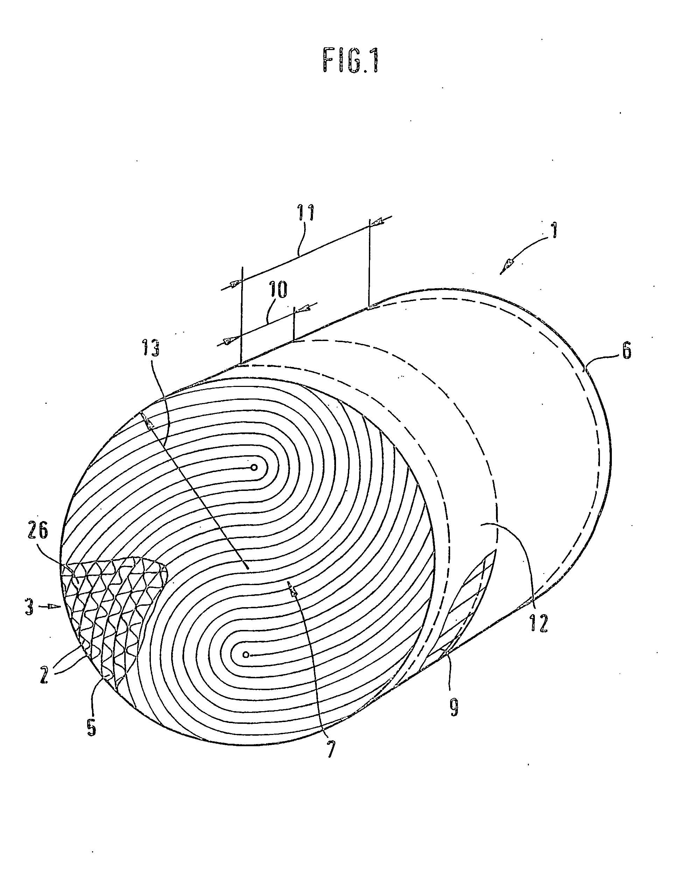

Figur 1 zeigt schematisch und perspektivisch einen aluminiumhaltigen Wabenkörper 1 mit gestapelten und s-förmig gewickelten Metallfolien 2. Der Wabenkörper 1 weist Kanäle 5 auf, die mit glatten und gewellten Metallfolien 2 gebildet sind. Die Kanäle 5 und die Metallfolien 2 bilden eine entsprechende Wabenstruktur 3 aus. Die Wabenstruktur 3 ist von einem Mantelrohr 6 umgeben, welches über die Stirnseiten 7 des Wabenkörpers 1 hervorsteht. Die einzelnen, offenen Stirnflächen 26 der Kanäle 5 sind dabei im wesentlichen in den ebenen Stirnseiten 7 des Wabenkörpers 1 angeordnet.

Die Herstellung des dargestellten, aluminiumhaltigen Wabenkörpers 1 umfasst dabei beispielsweise folgende Schritte:
- Auswahl von zumindest teilweise strukturierten Metallfolien auf einer Aluminium-Basis;
- Stapeln und S-förmiges Wickeln von zumindest teilweise strukturierten Metallfolien zur Formgebung einer Wabenstruktur 3 mit etwa parallel zu einer Achse 4 (nicht dargestellt) verlaufenden Kanälen 5;
- vollständiges Einfügen der Metallfolien 2 in das Mantelrohr 6, wobei das Mantelrohr über die Stirnseiten 7 der Wabenstruktur 3 hinausragt;
- vollständiges Aufheizen einer Stirnseite 7 der Wabenstruktur 3 mit Hilfe mindestens eines Strahlungsheizers 8 (nicht dargestellt), wobei die Heizstrahlung derart auf die offenen Stirnflächen 26 der Kanäle 5 ausgerichtet ist, dass die Wabenstruktur 3 in einem Teilbereich 9 mit einer axialen Tiefe 10 (kleiner als axiale Länge 11 der Kanäle 5) so aufgeheizt wird, dass dieser Teilbereich 9 bereits nach etwa 2 Sekunden bis etwa 30 Sekunden eine Temperatur von etwa 450°C bis etwa 600°C aufweist;
- fügetechnisches Verbinden der Metallfolien 2 miteinander sowie der radial 13 außenliegenden Bereiche der Metallfolien 2 mit dem Mantelrohr 6, wobei die fügetechnische Verbindung durch Löten erfolgt.

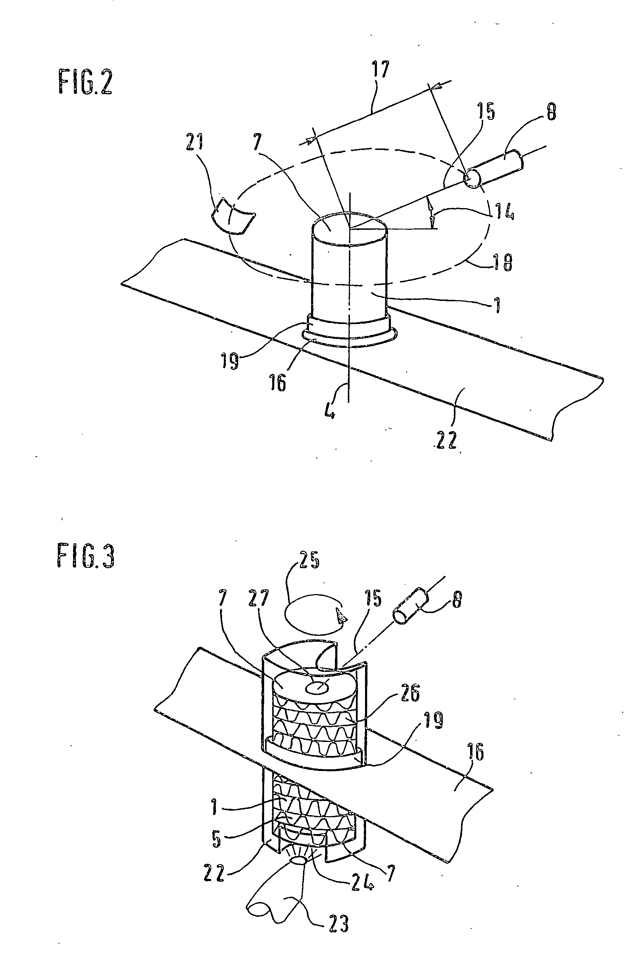

Figur 2 zeigt schematisch und perspektivisch eine erste Ausführungsform einer Vorrichtung zur Herstellung von metallischen, aluminiumhaltigen Wabenkörpern 1. Die Vorrichtung weist eine Positionierfläche 16 zur Positionierung eines Wabenkörpers 1 während eines Aufheizvorgangs sowie einen Infrarot-Strahlungsheizer 8 mit einer Strahlungsachse 15 auf. Die Strahlungsachse 15 und die zur Positionierfläche 16 etwa parallele Stirnseite 7 des Wabenkörpers 1 schließen dabei zumindest zeitweise einen Winkel 14 von 10° bis 80° ein. Der Wabenkörper 1 ist hierbei mittels Haltemitteln 19 fixiert. Der Abstand 17 des Infrarot-Strahlungsheizers 8 zum Auftreffpunkt der Heizstrahlung auf der Stirnseite 7 des Wabenkörpers 1 ist so zu wählen, dass eine möglichst schnelle Aufheizung der Wabenstruktur 3 bis zu der vorgegebenen Tiefe 10 gewährleistet ist.

Dabei ist es besonders vorteilhaft, den Infrarot-Strahlungsheizer 8 auf einer Bahn 18 relativ zum Wabenkörper 1 zu bewegen, wobei vorzugsweise der Winkel 14 variiert wird. Die Bahn 18 ist kreisförmig dargestellt, allerdings ist insbesondere unter Verwendung einer computergesteuerten Bewegung jede beliebige Bahn 18 generierbar. Für eine verbesserte Ausnutzung der Heizstrahlung weist die Vorrichtung einen Spiegel 21 auf, der gegebenenfalls reflektierte Heizstrahlung wieder auf die Wabenstruktur 3 zurückwirft. Da auf diese Weise eine sehr schnelle Aufheizung von Teilbereichen des Wabenkörpers 1 ermöglicht wird, bietet sich eine derartige Ausbildung von fügetechnischen Verbindungen als kontinuierlicher Prozess an. Die Positionierfläche 16 stellt hier einen Abschnitt eines Fließbandes 22 dar.

Figur 3 zeigt eine zweite Ausführungsform einer Vorrichtung zur Herstellung eines radial durchströmbaren, metallischen Wabenkörpers 1. Der Wabenkörper 1 weist dabei mehrere Lagen von strukturierten und glatten Metallfolien 2 auf, die im wesentlichen quer zu einem zentral angeordneten Innenrohr 27 bzw. radial auswärts verlaufende Kanäle 5 bilden. Der Wabenkörper 1 wird mit Haltemitteln 19 relativ zu der Positionierfläche 16 fixiert, wobei sich dieser durch die Positionierfläche 16 hindurch erstreckt. Der Wabenkörper 1 ist von einem Gehäuse 22 umgeben, dass insbesondere zur Ausbildung einer Schutzgasatmosphäre im Inneren dient. Dazu wird mittels einer Düse 22 beispielsweise argonhaltiges Schutzgas von einer Stirnseite 7 des Wabenkörpers 1 in das Innere des zentralen Innenrohres 27 zugeführt wird und aus den offenen Stirnflächen 26 der Kanäle 5 wieder austritt, wobei mit dem Infrarot-Strahlungsheizer 8 die fügetechnischen Verbindungen -in Schutzgasatmosphäre erzeugt wird. Das Gehäuse weist dazu Öffnungen 24 auf, die eine ungehinderte Erwärmung der Wabenstruktur 3 entlang der Strahlungsachse 15 gewährleistet. Der Pfeil 25 deutet dabei an, dass der Wabenkörper 1 beispielsweise während des Aufheizvorgangs rotiert, wobei vorzugsweise der Strahlungsheizer 8 in unterschiedlichen Winkeln 14 innerhalb eines Bereiches von 10° bis 80° auf die Stirnseite 7 des Wabenkörpers 1 strahlt. Auf diese Weise wird eine gleichmäßige Erwärmung und damit auch eine hochqualitative fügetechnische Verbindung gewährleistet. Weiterhin bietet die dargestellte Ausführungsform die Möglichkeit der beidseitigen und gleichzeitigen Erwärmung beider Stirnseiten 7 des Wabenkörpers 1. Dadurch könnten die Herstellungszeiten eines derartigen aluminiumhaltigen Wabenkörpers 1 weiter reduziert werden.

### Bezugszeichenliste

- 1: Wabenkörper
- 2: Metallfolie
- 3: Wabenstruktur
- 4: Achse
- 5: Kanal
- 6: Mantelrohr
- 7: Stirnseite
- 8: Strahlungsheizer
- 9: Teilbereich
- 10: Tiefe
- 11: Länge
- 12: Abschnitt
- 13: Radius
- 14: Winkel
- 15: Strahlungsachse
- 16: Positionierfläche
- 17: Abstand
- 18: Bahn
- 19: Haltemittel
- 20: Fließband
- 21: Spiegel
- 22: Gehäuse
- 23: Düse
- 24: Öffnung
- 25: Pfeil

## Patentansprüche

1. Verfahren zur Herstellung von aluminiumhaltigen Wabenkörpern (1) umfassend folgende Schritte:
- Auswahl von zumindest teilweise strukturierten Metallfolien auf einer Aluminium-Basis;
- Stapeln und/oder Wickeln der zumindest teilweise strukturierten Metallfolien (2) zur Formgebung einer Wabenstruktur (3) mit Kanälen (5),
- Aufheizen der Metallfolien (2) mit Hilfe mindestens eines Strahlungsheizers (8) von der offenen Stirnfläche (26) der Kanäle (5) her, wobei die Wabenstruktur (3) zumindest in einem Teilbereich (9) so aufgeheizt wird, dass der mindestens eine Teilbereich (9) nach etwa 2 Sekunden bis etwa 30 Sekunden eine Temperatur von etwa 450°C bis etwa 600°C aufweist;
- fügetechnisches Verbinden der Metallfolien (2) miteinander in dem mindestens einen Teilbereich (9).

2. Verfahren nach Anspruch 1, bei dem zum Aufheizen der Wabenstruktur (3) Strahlungsheizer eingesetzt werden, die eine gerichtete Infrarot-Heizstrahlung generieren, wobei ein deutliches Temperaturgefälle nahe außerhalb des mindestens einen Teilbereichs (9) erzeugt wird.

3. Verfahren nach Anspruch 1 oder 2, bei dem die Wabenstruktur (3) etwa parallel zu einer Achse (4) verlaufende Kanäle (5) aufweist, wobei die Heizstrahlung derart auf eine Stirnseite (7) der Wabenstruktur (3) ausgerichtet ist, dass die Wabenstruktur (3) nur in Teilbereichen (9) mit einer axialen Tiefe (10) aufgeheizt wird, die geringer ist als die axiale (4) Länge (11) der Kanäle (5).

4. Verfahren nach einem der Ansprüche 1 bis 3, bei dem die Metallfolien (2) vor dem Aufheizen zumindest teilweises in ein Mantelohr (6) eingefügt, miteinander fügetechnisch verbunden, anschließend vollständig in das Mantelrohr (6) eingesetzt und einer Anzahl der Metallfolien (2) mit diesem fügetechnisch verbunden werden.

5. Verfahren nach Anspruch 4, bei dem ein vollständiges Einfügen der Metallfolien (2) in das Mantelrohr (6) erfolgt, wobei das Mantelrohr (6) vorzugsweise über die Stirnseiten (7) der Wabenstruktur (3) hinausragt.

6. Verfahren nach einem der Ansprüche 1 bis 2, bei dem die Metallfolien (2) vor dem Aufheizen außen an einem Innenrohr (27) so angeordnet werden, dass die Metallfolien (2) im wesentlichen quer zum Innenrohr (27) verlaufende Kanäle (5) bilden, wobei einer Anzahl Metallfolien (2) mit dem Innenrohr (27) fügetechnisch verbunden werden.

7. Verfahren nach einem der Ansprüche 4 bis 6, bei dem die Teilbereiche (9) der Wabenstruktur (3) angrenzenden Abschnitte (12) des Mantelrohres (6) oder des Innenrohres (27) zusätzlich induktiv erhitzt werden.

8. Verfahren nach einem der Ansprüche 1 bis 7, bei dem die mindestens eine Stirnseite (7) der Wabenstruktur (3) vollständig bis zu einer vorgebbaren Tiefe (10) erhitzt wird.

9. Verfahren nach einem der Ansprüche 1 bis 8, wobei die Wabenstruktur (3) etwa parallel zu einer Achse (4) verlaufende Kanäle (5) aufweist, bei dem die Tiefe (10) der erhitzten Teilbereiche (9) variiert wird, wobei vorzugsweise in radial (13) außen angeordneten Teilbereichen (9) der Wabenstruktur (3) bis in eine größere Tiefe (10) erhitzt wird als in radial (13) innen angeordneten Teilbereichen (9).

10. Verfahren nach einem der Ansprüche 1 bis 9, bei dem Heizstrahlung in einem Winkel (14) zwischen 10° und 80° auf die mindestens eine Stirnseite (7) auftrifft.

11. Verfahren nach einem der Ansprüche 1 bis 10, bei dem der Wabenkörper (1) während des Aufheizens relativ zu dem mindestens einen Strahlungsheizer (8) bewegt wird.

12. Verfahren nach Anspruch 11, bei dem eine rotatorische Relativbewegung des mindestens einen Strahlungsheizers (8) um die Achse (4) des Wabenkörpers (1) erfolgt.

13. Verfahren nach Anspruch 11 oder 12, bei dem der Wabenkörper (1) um seine Achse (4) rotiert.

14. Verfahren nach einem der Ansprüche 11 bis 13, bei dem der Winkel (14) zwischen der Strahlungsachse (15) und der Achse (4) des Wabenkörpers (1) verändert wird.

15. Verfahren nach einem der Ansprüche 1 bis 14, bei dem die fügetechnischen Verbindungen durch Löten, Sintern und/oder Diffusionsschweißen hergestellt sind.

16. Verfahren nach Anspruch 15, bei dem vor dem Aufheizen zum Ausbilden der fügetechnischen Verbindungen Lot, Diffusionsvermittler oder dergleichen in den Teilbereichen (9) angeordnet wird.

17. Verfahren nach einem der Ansprüche 1 bis 16, bei dem die fügetechnischen Verbindungen unter Schutzgas hergestellt werden.

## Claims

1. A process for producing aluminum-containing honeycomb bodies (1), comprising the following steps:
- selecting at least partially structured metal foils based on aluminum;
- stacking and/or winding of the at least partially structured metal foils (2) to form a honeycomb structure (3) with passages (5),
- heating the metal foils (2) with the aid of at least one radiant heater (8) from the open end face (26) of the passages (5), the honeycomb structure (3), at least in a subregion (9), being heated in such a way that the at least one subregion (9), after approximately 2 seconds to approximately 30 seconds, is at a temperature of approximately 450°C to approximately 600°C;
- connecting the metal foils (2) to one another by a joining technique in the at least one subregion (9).

2. The process as claimed in claim 1, in which radiant heaters which generate a targeted infrared heating radiation are used to heat the honeycomb structure (3), generating a clear temperature drop in the vicinity of the outside of the at least one subregion (9).

3. The process as claimed in claim 1 or 2, in which the honeycomb structure (3) has passages (5) running approximately parallel to an axis (4), the heating radiation being directed onto an end side (7) of the honeycomb structure (3) in such a manner that the honeycomb structure (3) is heated only in subregions (9) with an axial depth (10) which is less than the axial (4) length (11) of the passages (5).

4. The process as claimed in one of claims 1 to 3, in which the metal foils (2), prior to heating, are at least partially introduced into a tubular casing (6), are connected to one another by a joining technique, and are then completely inserted into the tubular casing (6), and a number of the metal foils (2) are connected to the tubular casing by a joining technique.

5. The process as claimed in claim 4, in which the metal foils (2) are completely introduced into the tubular casing (6), with the tubular casing (6) preferably projecting beyond the end sides (7) of the honeycomb structure (3).

6. The process as claimed in either of claims 1 and 2, in which the metal foils (2), prior to heating, are arranged on the outside of an inner tube (27), in such a way that the metal foils (2) form passages (5) running substantially transversely to the inner tube (27), with a number of metal foils (2) being connected to the inner tube (27) by a joining technique.

7. The process as claimed in one of claims 4 to 6, in which the sections (12) of the tubular casing (6) or of the inner tube (27) which adjoin subregions (9) of the honeycomb structure (3) are additionally heated inductively.

8. The process as claimed in one of claims 1 to 7, in which the at least one end side (7) of the honeycomb structure (3) is completely heated to a predeterminable depth (10).

9. The process as claimed in one of claims 1 to 8, in which the honeycomb structure (3) has passages (5) running approximately parallel to an axis (4), and in which the depth (10) of the heated subregions (9) is varied, with heating preferably being carried out to a greater depth (10) in subregions (9) of the honeycomb structure (3) which are arranged radially (13) outward than in subregions (9) which are arranged radially (13) inward.

10. The process as claimed in one of claims 1 to 9, in which heating radiation impinges on the at least one end side (7) at an angle (14) of between 10° and 80°.

11. The process as claimed in one of claims 1 to 10, in which the honeycomb body (1) is moved relative to the at least one radiant heater (8) during the heating operation.

12. The process as claimed in claim 11, in which a rotational relative movement of the at least one radiant heater (8) takes place about the axis (4) of the honeycomb body (1).

13. The process as claimed in claim 11 or 12, in which the honeycomb body (1) rotates about its axis (4).

14. The process as claimed in one of claims 11 to 13, in which the angle (14) between the radiation axis (15) and the axis (4) of the honeycomb body (1) is varied.

15. The process as claimed in one of claims 1 to 14, in which the connections by a joining technique are produced by brazing, sintering and/or diffusion welding.

16. The process as claimed in claim 15, in which, prior to the heating used to form the connections by a joining technique, brazing material, diffusion promoter or the like is arranged in the subregions (9).

17. The process as claimed in one of claims 1 to 16, in which the connections by a joining technique are produced under shielding gas.

## Revendications

1. Procédé destiné à la fabrication de corps en nids d'abeilles (1) contenant de l'aluminium, comportant les étapes suivantes :
- Choix de feuilles métalliques au moins partiellement structurées sur une base d'aluminium ;
- empilement et/ou enroulement des feuilles métalliques au moins partiellement structurées (2) pour le façonnement d'une structure en nids d'abeilles (3) avec des canaux (5),
- réchauffement des feuilles métalliques (2) à l'aide d'au moins un radiateur à rayonnement (8) en partant de la face frontale (26) des canaux (5), la structure en nids d'abeilles (3) étant réchauffée de manière telle dans au moins une région partielle (9), qu'après environ 2 secondes à environ 30 secondes l'au moins une région partielle (9) a une température d'environ 450° à environ 600° ;
- liaison par technique de jointoiement des feuilles métalliques (2) entre elles dans l'au moins une région partielle (9).

2. Procédé selon la revendication 1, dans lequel pour réchauffer la structure en nids d'abeilles (3) des radiateurs à rayonnement sont utilisés, qui génèrent un rayonnement chauffant infrarouge dirigé, dans quel cas un gradient thermique net est généré à proximité de l'extérieur de l'au moins une région partielle (9).

3. Procédé selon la revendication 1 ou 2, dans lequel la structure en nids d'abeilles (3) a des canaux (5) qui s'étendent parallèlement à un axe (4), le rayonnement chauffant étant dirigé de manière telle sur une face frontale (7) de la structure en nids d'abeilles (3), que la structure en nids d'abeilles (3) n'est réchauffée que dans des régions partielles (9) avec une profondeur axiale (10) qui est plus petite que la longueur (11) axiale (4) des canaux (5).

4. Procédé selon l'une des revendications 1 à 3, dans lequel avant d'être réchauffées les feuilles métalliques (2) sont introduites au moins partiellement dans un tube d'enveloppe (6), sont reliées entre elles par technique de jointoiement, ensuite introduites complètement dans le tube d'enveloppe (6) et un nombre de feuilles métalliques (2) relié avec celles-ci.

5. Procédé selon la revendication 4, dans lequel une introduction complète des feuilles métalliques (2) dans le tube d'enveloppe (6) est effectuée, le tube d'enveloppe (6) s'étendant de préférence au-delà des faces frontales (7) de la structure en nids d'abeilles (3).

6. Procédé selon l'une des revendications 1 à 2, dans lequel les feuilles métalliques (2) avant d'être réchauffées sont agencées de manière telle à l'extérieur sur un tube intérieur (27), que les feuilles métalliques (2) forment des canaux (5) s'étendant sensiblement de façon transversale par rapport au tube intérieur (27), un nombre des feuilles métalliques (2) étant reliées au tube intérieur (27) par technique de jointoiement.

7. Procédé selon l'une des revendications 4 à 6, dans lequel les sections (12) du tube d'enveloppe (6) ou du tube intérieur (27) qui sont adjacentes des régions partielles (9) de la structure en nids d'abeilles (3) sont chauffées additionnellement de façon inductive.

8. Procédé selon l'une des revendications 1 à 7, dans lequel l'au moins une face frontale (7) de la structure en nids d'abeilles (3) est chauffée complètement jusqu'à une profondeur pouvant être prédéterminée (10).

9. Procédé selon l'une des revendications 1 à 8, la structure en nids d'abeilles (3) ayant des canaux (5) s'étendant environ parallèlement par rapport à un axe (4) et dans lequel la profondeur (10) des régions partielles (9) réchauffées est variée, dans quel cas le réchauffement est effectué de préférence jusqu'à une plus grande profondeur (10) dans des régions partielles (9) agencées radialement (13) vers l'extérieur de la structure en nids d'abeilles (3) que dans des régions partielles (9) agencées radialement (13) à l'intérieur.

10. Procédé selon l'une des revendications 1 à 9, dans lequel le rayonnement chauffant rencontre l'au moins une face frontale (7) suivant un angle (14) entre 10° et 80°.

11. Procédé suivant l'une des revendications 1 à 10, dans lequel le corps en nids d'abeilles (1) est déplacé durant le réchauffement relativement par rapport à l'au moins un radiateur à rayonnement (8).

12. Procédé selon la revendication 11, dans lequel un mouvement relatif rotatif de l'au moins un radiateur à rayonnement (8) est effectué autour de l'axe (4) du corps en nids d'abeilles (1).

13. Procédé selon la revendication 11 ou 12, dans lequel le corps en nids d'abeilles (1) tourne autour de son axe (4).

14. Procédé selon l'une des revendications 11 à 13, dans lequel l'angle (14) entre l'axe de rayonnement (15) et l'axe (4) du corps en nids d'abeilles (1) est modifié.

15. Procédé selon l'une des revendications 1 à 14, dans lequel les liaisons par technique de jointoiement sont fabriquées par brasage, frittage et/ou par soudage par diffusion.

16. Procédé selon la revendication 15, dans lequel avant le réchauffement pour la formation des liaisons par technique de jointoiement, du matériau de brasure, du promoteur de diffusion et d'autres choses semblables sont agencées dans les régions partielles (9).

17. Procédé selon l'une des revendications 1 à 16, dans lequel les liaisons par technique de jointoiement sont fabriquées sous gaz de protection.
